# EUROPEAN PATENT SPECIFICATION

(11) **EP 1 615 123 B1**
(45) Date of publication and mention of the grant of the patent: **07.04.2010**
(21) Application number: 04016170.5
(22) Date of filing: 09.07.2004
(51) Int. Cl.: G06F 9/38

(54) **High performance user configurable coprocessor**
Hochleistungsfähiger benutzer-konfigurierbarer Prozessor
Coprocesseur configurable par l'utilisateur à haute performance

(43) Date of publication of application: 11.01.2006
(73) Proprietor: Chapman, Michael Colin George, 34970 Lattes (FR)
(72) Inventor: Chapman, Michael Colin George, 34970 Lattes (FR)

(56) References cited:
- EP-A- 0 280 821
- EP-A- 0 352 935
- EP-A- 0 901 071
- US-A- 6 032 252

## Description

### FIELD OF THE INVENTION

The present invention relates to a data processing system having a processor and at least one coprocessor, and, more particularly, to a method and apparatus for interfacing the processor to the coprocessor or coprocessors.

### BACKGROUND OF THE INVENTION

The ability to extend a baseline architecture processor functionality through dedicated and specialized hardware functional elements is an important aspect of embedded processors for applications which demand high performance on specialized functions.

One of the preferred methods for extending a baseline architecture processor functionality is through the use of coprocessors. These coprocessors are often dedicated to a single purpose and are controlled by the main processor. Examples of such coprocessors include specialized digital signal processors for the calculation of fast Fourier transformations, correlation, cryptographic processors and image processors.

There are different approaches to coprocessors currently in common use. One alternative is to tightly integrate the coprocessor functionality into the instruction set of the main processor. For instance the floating point unit of many microprocessors is integrated in this way. This has the advantage that the coprocessor instructions can be used in application software as if the coprocessor is part of the main processor architecture.

However the integration of a coprocessor in this way requires that the designer of the coprocessor know a substantial amount about how the main processor works. This makes it almost impossible for someone outside the design team of the processor itself to add such a coprocessor to a system. For this reason this approach is not common outside of the processor manufacturers themselves.

The alternative implementation is to loosely couple the coprocessor to the primary processor by attaching the coprocessor to the IO bus of the primary processor.

This has the advantage of abstracting and isolating the operation of the coprocessor from the primary processor, and thus substantially lessening the effort required to integrate a new coprocessor with an existing processor.

However the disadvantage of this is the performance hit resulting from this loose coupling. The break-even point for invoking such a coprocessor is increased correspondingly. Also the software is obliged to check that the operation has completed. Thus, many otherwise attractive applications for coprocessors are not cost and performance effective.

This however is currently the only method commonly open to most designers wishing to add on a coprocessor today and as such is of course very often used.

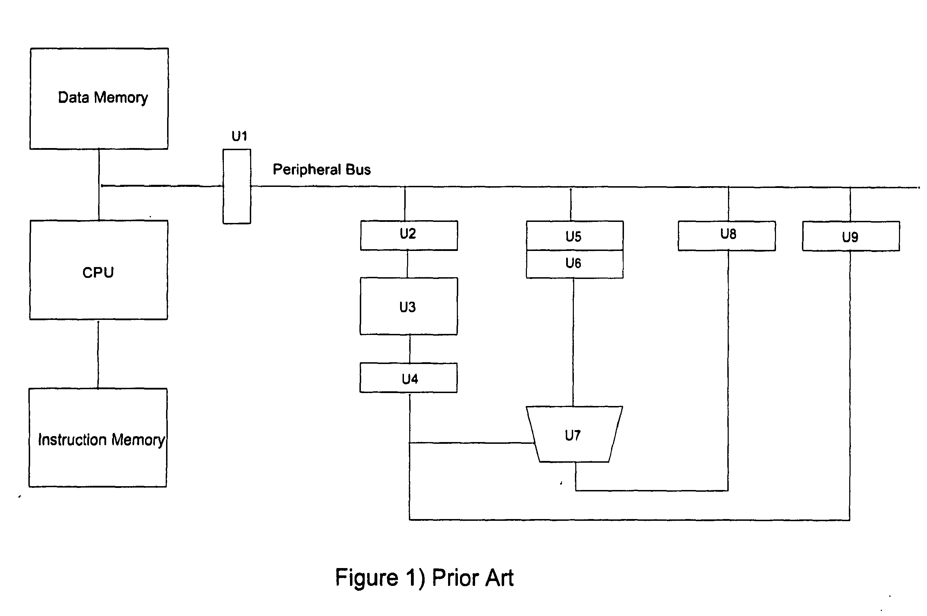

Figure 1) Prior Art - shows this approach. I.e. the coprocessor is hooked up as a peripheral to a peripheral bus. The figure shows a CPU attached to its instruction and data memories (these may be caches of course) which is attached to its peripheral bus by a bridge U1.

The processor software then needs to write the operands into so called SFR's (U5, U6) belonging to the peripheral before activating the execution of the peripheral by writing a command to another SFR (U2). The command is decoded by U3 registered again by U4 before being passed with the operands to the functional unit U7.

The result is placed into the SFR U8 and a status is written to U9. The status is required for operations which may not immediately complete so that the software can check that the valid in U8 is valid before fetching and using it.

Obviously the use of such a coprocessor entails quite a considerable overhead. The operands need to be moved from CPU registers to the operands registers U5 and U6 using memory store instructions through the peripheral bus (which is usually run at a lower clock rate than that of the CPU). The command is written to the command register with another store instruction. And then the status register is read using a load instruction and checked (this sometimes requires an addition test or compare instruction), a conditional branch instruction executed to wait until the status register indicates completion, and then the result is loaded back to a CPU register.

It is thus important to have a coprocessor interface that is tightly coupled enough that usage of the interface is fast enough that invoking even fairly simple functions is advantageous, while abstracting the interface to such an extent that the coprocessor is isolated from as many of the details as possible of the processor implementation. This also includes making the interface programmer friendly in order to facilitate tailoring new coprocessor applications in software instead of in hardware.

### OBJECT OF THE INVENTION

The object of this invention is a general, flexible and simple way of tightly integrating coprocessors with the main processor combining all the advantages of the tightly integrated floating point type of coprocessor (from the performance and software integration point of view) with the ease of integration of a coprocessor which is essentially just hooked up to an IO bus.

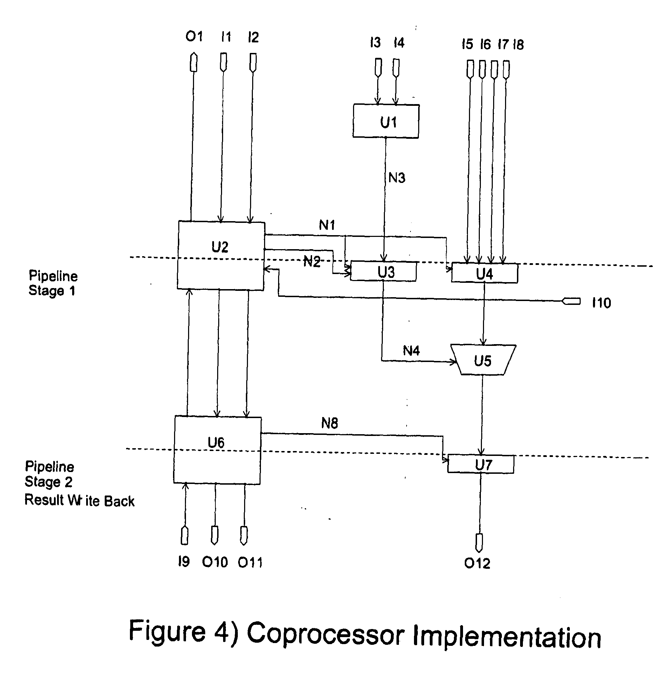

A coprocessor designed according this invention (see figure 4) has a very simple interface. It receives its operands, function code and a signal indicating that the function code is valid (this corresponds to a select signal for a peripheral indicating that the address if valid) plus one additional piece of information - a tag which contains a compacted form of processor scheduling information. The coprocessor when it has completed its work presents this tag, unmodified, along with a valid signal and its result back to the main processor. This provides all the information the main processor needs to put away the result to the right place, to forward the result to other waiting instructions (which could in turn be coprocessor instructions for the same or some other coprocessor).

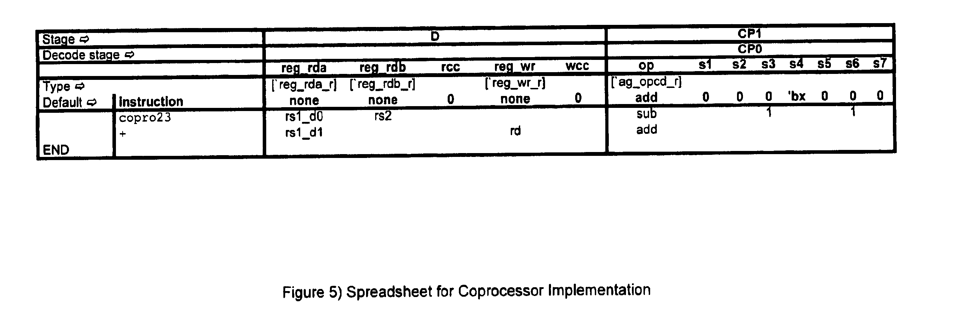

The key element here for the coprocessor designer is that the interface itself is extremely simple. It is however very powerful and flexible. It enables the tight integration of the instructions dispatched to the coprocessor to be executed as if they were part of the main processor instruction set. The coprocessor designer need not understand the processor architecture or its scheduling.
The main processor need not know anything about the coprocessor other than the instructions which need to be dispatched to it, and the registers that instruction reads and writes. This information can be readily specified in a simple 'Excel' type of spreadsheet. An example of such a spreadsheet is shown in figure 5.

The tag as used by the current (simple) implementation of this invention contains simply the register identifier of the register (if any) which should be written by the coprocessor instruction. Note that the condition code bits are handled in exactly the same way as for any other register which can be written by the coprocessor instructions. This kind of tag suffices for a very large class of processor implementations - including those which do register renaming, multiple dispatch etc. In such cases the tag would probably refer to a reorder buffer slot.

However the coprocessor interface itself remains identical - except perhaps for the number of bits in the tag. This enables the same coprocessor design to be used across many generations of the processor architecture.

A coprocessor according to the invention is defined in claim 1. A method of scheduling operations is defined claims 6 and 7. Embodiments of the invention are defined in dependant claims 2-8.

### LIST OF FIGURES

1. Prior art. This figure shows how coprocessors are hooked up to the peripheral bus which is the typical method used today.
2. 1^{st} Embodiement of the Invention. Shows how coprocessors implemented accord to the invention are hooked up to the CPU.
3. Coprocessor Pipeline Control Logic.
4. Coprocessor Implementation. This figure together with the previous one shows in detail how to implement a coprocessor according to the invention.
5. Spreadsheet for Coprocessor Implemention. This figure is an example spreadsheet for a coprocessor.

### DESCRIPTION OF A COPROCESSOR ACCORDING TO THE INVENTION

Which instructions are to be dispatched to the coprocessor is indicated by an excel spreadsheet. This same spreadsheet also indicates which registers need to be read by the coprocessor instruction, and which register the coprocessor instruction will write. Note that the registers can be indexed by particular fields of the coprocessor instruction (for example rs1 which specified instructions bits 15:12 in this particular example processor's instruction set) or fixed registers specified directly (for example r15 and rtt can be directly specified in this particular processor).

This spreadsheet contains all the information required to automatically generate the logic to dispatch the coprocessor instruction and to create the tag described above and as such is an extremely convenient means of specifying such information.

An example of such a spreadsheet is shown in figure 5.

These are the following fields which are in the spread sheet
1) reg_rda Indicates which register for operand a will be read (if any)
2) reg_rdb Indicates which register for operand b will be read (if any)
3) rcc Indicates that the condition codes will be read
4) reg_wr Indicates which register will be written
5) wcc Indicates that the condition codes will be updated

Possible values currently for reg_rda are
- none: No register is required
- rs1: Read the register specified in bits [15:12] of the instruction
- rtt: Read register 16 (return from trap register)
- rs1_d0: First word of double word register in bits [15:12]
- rs1_d1: Second word of double word register in bits [15:12]
- rs1_q0: First word of quad word register in bits [15:12]
- rs1_q1: Second word of quad word register in bits [15:12]
- rs1_q2: Third word of quad word register in bits [15:12]
- rs1_q3: Fourth word of quad word register in bits [15:12]

### Possible values currently for reg_rdb are

- none: No register is required
- rs2: Read register specified in bits [11:8] of instruction

### Possible values currently for reg_wr are

- none: No register will be written
- rd: Register in bits [15:12] of the instruction
- r15: Write to r15
- rtt: Write to register 1
- rd_d0: First word of double word register in bits [15:12]
- rd_d1: Second word of double word register in bits [15:12]
- rd_q0: First word of quad word register in bits [15:12]
- rd_q1: Second word of quad word register in bits [15:12]
- rd_q2: Third word of quad register in bits [15:12]
- rd_q3: Fourth word of quad word register in bits [15:12]

### Possible values for rcc and wcc are

- 1: The condition codes will be read (rcc) or written (wcc)
- 0: The condition codes are not used (rcc) or not written (wcc)

This information is all that is required to generate the logic for the processor to create the tag. The exact representation of the tag and the information it is required to contain will of course vary from processor implementation to processor implementation however different implementations of the same instruction set architecture will be capable of using the same spreadsheet to generate the tag - assuming only that the micro-architecture contains at least the register description fields which are used in that particular spreadsheet. In our experience this is case over many generations of the architecture - even when the instruction set changes quite considerably.

Most coprocessors will only use the first two possible values for each of these fields. In such cases, the coprocessor is almost entirely independent of the CPU architecture. The coprocessor design itself can then be used in radically different processor instruction set architectures and implementations.

### SPECIFICATION OF THE COPROCESSOR INTERFACE

Here is a detailed description of each signal in the coprocessor interface in one particular realisation of a coprocessor and coprocessor interface according to this invention. This coprocessor interface is applicable to a large number of different processor instruction set architectures and different implementations of those architectures. The number of bits in the scheduling tag may change, but since this tag is never processed in any way within the coprocessor, this has almost no impact on the coprocessor implementation itself.

System clock and active low asynchronous reset signal.
- input: clk, rst_n;

Opcode and micro-sequence number (the sequence number is used to identify the micro-instruction making up the macro instruction defmed by the opcode). A coprocessor instruction can be dispatched as multiple (up to 16 in this implementation) microinstructions - each potentially reading and writing different registers.
- input [7:0]: opcode;
- input [3:0]: useqn;

Scheduling tag as described above.
- input: ['tag_r] tag;

The following signal indicates that the instruction in opcode is an instruction which should be dispatched to this coprocessor and that the coprocessor has indicated that it is not busy. This signal is never active if cp_busy output is active. This signal means that the coprocessor must execute the instruction.
- input: valid_cp_ins;

This indicates that the coprocessor is busy and cannot accept another instruction yet. This will only stall the processor core if the core needs to dispatch another instruction to this same coprocessor.
- output: cp_busy;

Value of input operands (register a, register b, immediate value and value of condition code bits. Of course the values on opa, opb and cc are only well defined if the coprocessor said it was going to read these values.
- input: [31:0] opa, opb, imm_val;
- input: [3:0] cc;

This signal indicates that the local result bus cannot accept a result from this coprocessor in this cycle (e.g. because some other coprocessor or functional unit is using it).
- input: q_busy;

Result of coprocessor microinstruction (value and condition code).
- output: [31:0] cp_result;
- output: ['cc_r] cp_cc_result;

Scheduling tag propagated through the coprocessor.
- output: ['tag_r] cp_tag;

Result is valid. If the coprocessor instruction does not produce a result, then this will never be active for that instruction.
- output: cp_valid;

### DESCRIPTION OF FIGURES

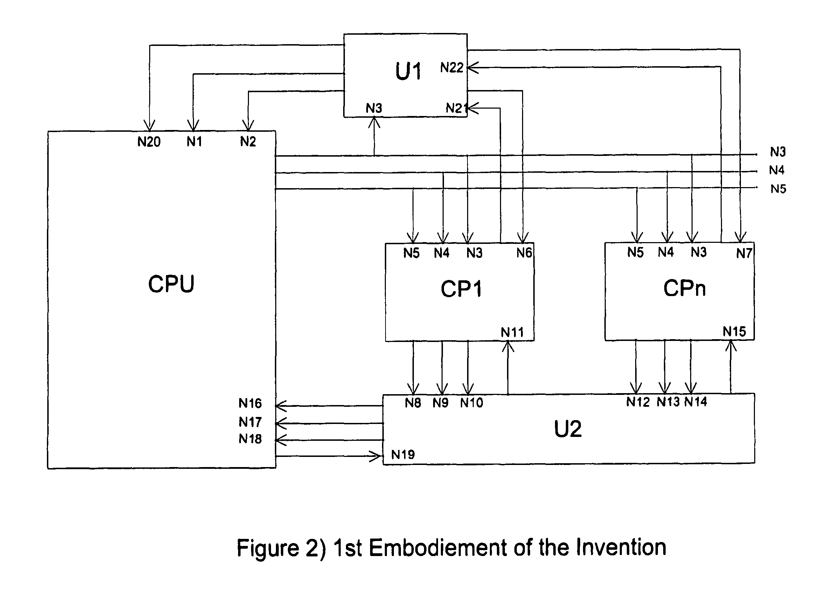

Figure 2) 1 st embodiment of the invention - shows how the coprocessors are attached to the CPU.
The block U1 is combinational logic which is generated from the collection of spreadsheets for all the coprocessors. Using the opcode and useqn (N3) from the CPU it generates the tag (N2) to control the cpu scheduling and the individual valid_cp_ins (N6, N7) signals for each of the coprocessors. An additional signal, not_cp_ins (N1) is generated to allow the CPU to take an illegal instruction trap for non implemented instructions. The signal cp_busy (N20) output of U1 indicates that an instruction which needs to be dispatched to a coprocessor cannot be dispatched yet because the required coprocessor is busy. This is generated from the cp_busy1 (N21) and cp_busyn (N22) signals from the coprocessors (CP1 and CPn).
CP1 and CPn are the coprocessors. There may be any (reasonable) number of coprocessors. They each receive the opcode and useqn (N3), the operands (N5) and the cpu scheduling information, the tag (N4) and their individual valid_cp_ins (N6, N7) signals. The coprocessors have a cp_result, cp_cc_result output bus (N8, N12), the tag output cp_tag (N9, N13) and a cp_valid (N10, N14) indicating that the result is valid and a slot is request on the result bus. The result bus multiplexor indicates to a coprocessor which has cp_valid active if it cannot accept the result with the signal q_busy1 (N11) and q_busyn (N15). The signals q_busy1 and q_busyn are generated from the CPU output q_busy (N19) and the cp_valid1 (N10) and cp_validn (N14) outputs from the coprocessors.
The coprocessor itself is explained in detail in the next two figures.
Block U2 is the result arbiter and multiplexor. This block is automatically generated and depends only on the number of coprocessors which are present. It implements the arbitration logic between the coprocessors which have valid results. A coprocessor which has a valid result activates its cp_valid output (N10, N14). U2 outputs the tag (N17) and result (N16) from the chosen coprocessor to the CPU and gives a q_busy (N11, N15) indication to the other coprocessors which have results to writeback. It also outputs a valid (N18) indication to the CPU (logical or of all the coprocessor cp_valid signals) and processes the q_busy (N19) signal from the CPU (if the CPU cannot write back the result in this cycle).

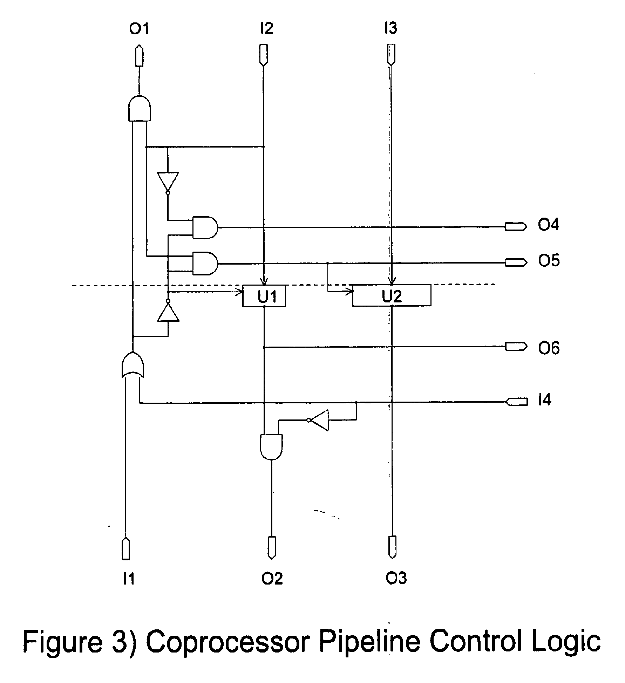

Figure 3) Coprocessor Pipeline Control Logic - shows the control logic cell for a pipeline stage in a coprocessor. This cell is used for each pipeline stage that the coprocessor has as well as for the result write back stage in our implementation.

O1 is the busy output to the previous stage (or the CPU for the first pipeline stage).

I2 is the valid input from the previous stage or from the CPU for the first pipeline stage. I2 for the first pipeline stage indicates that the instruction is to be dispatched to this coprocessor and all the operand inputs are valid.

I3 is the cpu scheduling information tag. This is not processed in any way in the coprocessor and is passed unchanged through the pipeline. It held in the register bank U2 and passed out on 03.

I1 input is connected to the busy output from the next stage. It means that this stage cannot pass its result into the next pipeline stage so that this stage has to be stalled.

In the case that a pipeline stage requires more than one cycle to complete (e.g. it depends on some other external resource such as a shared memory), the stage_busy input (I4 in the figure) may be activated to hold up the stage for as long as required. This signal may be connected to logic 0 in the event that the pipeline stage always executes in a single cycle.

05 is the output enable_stage which is activated to load the input registers of the pipeline stage.

If the stage is busy, then all the input registers are held to their valid previous values.

If the stage is not busy and there is nothing from the previous stage (or dispatched from the CPU) to execute, then 04 reset_stage is activated. This may be used to reset the pipeline input registers to an inactive state. This is often used to reset the control registers as shown in figure 4.

As can be clearly seen, the cpu scheduling information tag I3 is simply passed unchanged through the pipeline to 03.

Figure 4) Coprocessor Implementation - shows a simple coprocessor with a single pipeline stage. The cells U2 and U6 are the pipeline control cell from figure 4.

Cell U1 is a block of combinational decode logic for the micro-operations to be performed by the coprocessor. It generates the control signals N3 one cycle ahead of their use by the function unit U5. Cell U1 has inputs I3 (useqn - the micro-operation sequence number) and I4 (opcode). Cell U1 is automatically generated from a spreadsheet. Each stage (apart from the result write back stage) will typically use its own block of decode logic with the micro-operation sequence number useqn and the instruction operation code opcode being passed from stage to stage. Of course all the decode could be done in the decode cell U1 with the control signals being passed from stage to stage instead.

I5, I6, I7 and I8 are the operand inputs to the coprocessor comprising of the operand A, operand B, the immediate value field from the instruction, and the condition code values (opa, opb, imm_val, cc)

O1 (the busy output of U2, the cp_busy signal in the coprocessor interface) is the coprocessor busy output back to the CPU core. It will stall the CPU when it is active. It will of course only be active if the CPU is indicating that it has a valid instruction and operands for dispatch to this coprocessor.

I1 (valid_cp_ins) comes from the automatically generated decode logic to say whether the instruction is valid for this coprocessor (i.e. should be dispatched to this coprocessor) and that the operands are valid.

I2 is the cpu scheduling information (tag) which is passed unchanged through U2 and U6 to be returned to the CPU as O11.

N1 is the enable_stage output from the pipeline control cell U2.

N2 is the reset_stage output from U2.

U3 is the register bank for the control signals generated by the decode logic U1. The control signals are reset with N2 (reset_stage) to prevent anything happening if there is no valid coprocessor instruction to enter the pipeline.

U4 is the operand input register bank for the pipeline stage.

U5 is the functional unit logic for the pipeline stage which is controlled by the control signals N4 from the register bank U3.

U7 is the result output register bank. This register bank is enabled by the enable_stage output N8 of the pipeline control cell U6. This register bank includes registers for the modified condition codes for coprocessors (if any of the coprocessor instructions in this particular coprocessor can modify the condition codes).

O12 is the output to the CPU result bus (consisting of cp_result and cp_cc_result).

O10 (cp_valid) indicates when there is a valid result.

O11 (cp_tag) holds the scheduling information tag for the CPU.

I9 (q_busy) indicates that the result bus is busy. I9 is ever only active if the coprocessor is requesting a slot on the result bus (i.e. O10 cp_valid is active).

An extra stage for the result write back is used in order to enable the multiplexing of a large number of coprocessors onto the result bus without having an impact on the critical forwarding paths in the processor. A coprocessor always has at least one stage followed by this result write back stage as shown in this figure.

I10 (stage_busy) may be activated if the function unit U5 needs more than one cycle for any reason.

Figure 5) Shows a spreadsheet for a coprocessor implemented according to this invention.

This particular example indicates that this particular coprocessor decodes the instruction copro23 (one of ca 100 instructions reserved for the coprocessors. This instruction results in two micro-operations. The first micro-operation reads two source registers, one of which is the least significant part of a double word (d0). The second micro-operation one reads a further register, the most significant part of a double word operand (d1) and will produce a single result. The columns reg_rda through to wcc are required.

The further columns are optional and can be used to generate decode logic for the implementation of the coprocessor itself. The headers CP0 and CP1 are used simply as prefixes for the signal names and block names etc. The intention is that the decode stage prefix (CP0 in this case) is the name of the pipeline stage where the decode is done. The CP1 is the block name and will be used for generating the file name and module name. Row 3 is the names of the signals which will be generated. Row 4 is the bit width which will be used in the declaration of the signal. Row 5 is the default values for the signals if no other value is explicitly given to the signal in the instruction decode rows.

A '+' in the instruction column indicates that this is a follow on micro-operation for the instruction above. In our implementation an instruction can be decoded into up to 16 micro-operations. A micro-operation can take as many clocks as required (if the stage_busy signal is activated for some pipeline stage), but a follow on micro-operation cannot be dispatched if the coprocessor says that it is busy (cp_busy of the first pipeline stage is active).

## Claims

1. A pipelined coprocessor coupled to a processor (CPU) for extending the functionality of the processor (CPU) **characterised by** a means to receive processor scheduling information (I3,I2) from the processor (CPU) and by a means to pass said processor scheduling information unchanged through its pipeline (U2) and by a means to return said processor scheduling information (03,011) back to the processor (CPU) with the result of the coprocessor operation (O12).

2. A pipelined coprocessor according to claim 1 further **characterised by** that the said processor scheduling information contains the information that the processor (CPU) requires to put back the result to the correct location.

3. A pipelined coprocessor according to claims 1,2 further **characterised by** comprising a control logic that generates control signals or groups of control signals which should be activated for each pipeline stage and each coprocessor instruction.

4. A pipelined coprocessor according to claim 3 further **characterised by** that the control signals support one or more instructions which are destined for this particular coprocessor and by that the control signals select the source and destination registers and control whether the condition code is to be written.

5. A pipelined coprocessor according to claims 1,2,3,4 with handshake **characterised by** a valid signal (I1) from processor (CPU) to coprocessor indicating that the instruction is destined for this particular coprocessor and that the input operands are valid, and by a busy signal from the coprocessor to the processor (CPU) (O1) indicating that it cannot start another instruction and by a valid signal from the coprocessor to the processor (CPU) (O10) indicating that the coprocessor has finished calculating the result and by a busy signal from the processor (CPU) to the coprocessor (I9) indicating that the processor (CPU) cannot accept a new result.

6. A method of scheduling operations of a processor (CPU) and one or more coprocessors **characterised by** that the coprocessor receives the processor scheduling information from the processor (CPU) and passes said processor scheduling information unchanged through its pipeline and returns said processor scheduling information back to the processor (CPU) with the result of the coprocessor operation.

7. A method according to claim 6 further **characterised by** that the processor scheduling information contains all the information the processor (CPU) requires to put back the result to the required location.

## Patentansprüche

1. Ein Pipeline-Coprozessor gekoppelt mit einem Prozessor (CPU) für die Erweiterung der Funktionalität des Prozessors (CPU), **gekennzeichnet durch** ein Mittel, um Scheduling-Information (I3, I2) vom Prozessor (CPU) zu erhalten und ein Mittel, um die besagte Prozessor Scheduling-Information unverändert **durch** seine Pipeline (U2) passieren zu lassen und ein Mittel, um die besagte Prozessor Scheduling-Information (O3, 011) zum Prozessor (CPU) zurückzuführen mit dem Ergebnis der Coprozessor Operation (O12).

2. Ein Pipeline-Coprozessor nach Anspruch 1), weiter **dadurch gekennzeichnet, daß** die genannten Prozessor Scheduling-Information enthält die Information, die der Prozessor (CPU) benötigt, um das Ergebnis an die richtige Stelle zurückzuschreiben.

3. Ein Pipeline-Coprozessor nach Anspruch 1), 2) weiter **dadurch gekennzeichnet" daß** er aus einer Steuerlogik besteht, die Steuersignale oder Gruppen von Steuersignalen enthält, die für jede Pipeline-Stufe und jede Coprozessor Anweisung aktiviert werden sollten.

4. Ein Pipeline-Coprozessor nach Anspruch 3) weiter **dadurch gekennzeichnet, daß** die Steuersignale eine oder mehreren Anweisungen unterstützen, die für diesen bestimmten Coprozessor bestimmt sind und daß die Steuersignale die Ouell-und Ziei-Register selektieren und bestimmen, ob die Condition Code geschrieben wird.

5. Ein Pipeline-Coprozessor nach Anspruch 1), 2) ,3) ,4) mit Handshake, **gekennzeichnet durch** ein Gültig-Signal (I1) vom Prozessor (CPU) zum Coprozessor, das darauf hinweist, dass die Anweisung für diesen besonderen Coprozessor bestimmt ist, und daß die Eingangsoperanden gültig sind und **durch** ein Besetzt-Signal vom Coprozessor zum Prozessor (CPU) (O1), das darauf hinweist, dass kein neuer Befehl gestartet werden kann und **durch** ein Gültig-Signal vom Coprozessor zum Prozessor (CPU) (010), das indiziert, daß der Coprozessor die Kalkulation des Erbebinsses beendet hat und **durch** ein Besetzt-Signal vom Prozessor (CPU) zum Co-Prozessor (I9), das darauf hinweist, daß der Prozessor (CPU) kein neues Ergebnis akzeptieren kann.

6. Eine Methode zur Einplanung von Anweisungen eines Prozessors (CPU) und eines oder mehreren Coprozessoren, sodaß der Coprozessor die Scheduling-Informationen des Prozessor (CPU) erhält und übergibt die besagte Scheduling-Informationen unverändert durch seine Pipeline und gibt die besagte Scheduling-Informationen an den Prozessor (CPU) zurück, mit dem Ergebnis der Coprozessor-Operation.

7. Verfahren nach Anspruch 6) weiter **dadurch gekennzeichnet, daß** die Prozessor-Scheduling-Information alle Informationen enthält, die der Prozessor (CPU) benötigt, um das Ergebnis an die gewünschte Stelle zurückzuschreiben.

## Revendications

1. Un coprocesseur pipeliné relié à un processeur (CPU) pour augmenter les fonctionnalités du processeur (CPU), **caractérisé par** un moyen de recevoir l'information de planification du processeur (I3, I2) provenant du processeur (CPU) et par un moyen de transférer cette dite information de planification du processeur inchangée à travers son pipeline (U2) et par un moyen de retourner de nouveau cette dite information de planification du processeur (O3,O11) au processeur (CPU) avec le résultat du calcul du coprocesseur (O12).

2. Un coprocesseur pipeliné selon la revendication 1, **caractérisé en outre en ce que** cette dite information de planification du processeur contient l'information que le processeur (CPU) a besoin pour remettre le résultat au bon endroit.

3. Un coprocesseur pipeliné selon les revendications 1 et 2, **caractérisé en outre en ce qu'**il contient une logique de contrôle qui génère des signaux de commande ou des groupes de signaux de commande qui doivent être activés pour chaque étape du pipeline et chaque instruction du coprocesseur.

4. Un coprocesseur pipeliné selon la revendication 3, **caractérisé en outre en ce que** les signaux de commande gèrent une ou plusieurs instructions qui sont destinés à ce coprocesseur particulier et **en ce que** les signaux de commande choisissent les registres de source et de destination, et commandent si le code de condition doit être écrit.

5. Un coprocesseur pipeliné selon les revendications 1 à 4 avec coordination, **caractérisé en ce qu'**un signal valide (I1) du processeur (CPU) au coprocesseur indique que l'instruction est destinée à ce coprocesseur particulier et que les opérandes d'entrée sont valides, et **en ce qu'**un signal occupé du coprocesseur au processeur (CPU) (O1) indique qu'il ne peut pas commencer une autre instruction et **en ce qu'**un signal valide du coprocesseur au processeur (CPU) (O10) indique que le coprocesseur a fini de calculer le résultat et **en ce qu'**un signal occupé du processeur (CPU) au coprocesseur (I9) indique que le processeur (CPU) ne peut pas accepter un nouveau résultat.

6. Une méthode d'opérations de planification d'un processeur (CPU) et d'un ou plusieurs coprocesseurs, **caractérisée en ce que** le coprocesseur reçoit l'information de planification du processeur provenant du processeur (CPU) et transmet la dite information de planification du processeur inchangée à travers son pipeline et retourne de nouveau la dite information de planification du processeur au processeur (CPU) avec le résultat du calcul du coprocesseur.

7. Une méthode selon la revendication 6, **caractérisée en outre en ce que** l'information de planification du processeur contient toute l'information que le processeur (CPU) a besoin pour remettre le résultat au bon endroit.
